# EUROPEAN PATENT APPLICATION

(11) **EP 0 544 395 A2**
(43) Date of publication of application: **02.06.1993**
(21) Application number: 92308666.4
(22) Date of filing: 23.09.1992
(51) Int. Cl.: B01J 19/08, F02M 27/04, F23K 5/08, C02F 1/48

(54) **Device for magnetically treating fluids gases or solids**

(30) Priority: 28.11.1991 MY 9102205
(71) Applicant: T.L.H. BROTHERS SDN. BHD., 10450 Georgetown, Penang (MY)
(72) Inventor: Tan, Lye Huat, 10450 Georgetown, Penang (MY)
(74) Representative: Johnson, Terence Leslie

(57) **Abstract**

A device (11) for magnetically treating a hydrocarbon fluid in a fuel line (21).

The device (11) includes a plurality of annular magnetic portions (L1-L3) each having a central aperture (17) which are aligned coaxially to form a central bore (19) through which the fuel line (21) is threaded. The central apertures (17) have varying diameters and are arranged in a graduated sequence starting with the smallest aperture (L3) at one end of the device and the largest aperture (L1) disposed towards the other end. The magnetic portions (L1-L3) are arranged so as to provide a uniformed magnetic field having poles of opposite polarity disposed at opposite ends of the bore (19). Optionally, a further magnetic portion (31) in the form of an inductive coil (33) may be incorporated into the device adjacent to the first magnetic portions (L1-L3) so that the fuel line can pass through the central bore (45) of the coil immediately after the central bore (19) of the first annular magnetic portions. Alternatively, the device can be fitted upon a spark plug (71) to magnetically treat fluid in a combustion chamber prior to and during combustion.

## Description

This invention relates to a device for magnetically treating fluids which has particular, but not exclusive, utility in the treatment of hydrocarbon fuels for use in internal combustion engines.

It has previously been known to magnetically treat hydrocarbon fuels for use in internal combustion engines to promote more efficient combustion, better efficiency and reduced emissions. These devices, however, have concentrated on creating a magnetic field where the magnetic flux describing the field intercepts a substantial portion of the fluid flow substantially at right angles to the direction of fluid flow, or alternatively substantially parallel with the direction of fluid flow.

It is an object of the present invention to provide a device for magnetically treating fluids which creates a magnetic field whereby the magnetic flux describing the field intercepts a substantial portion of the fluid flow at an oblique angle relative to the direction of fluid flow.

In accordance with one aspect of the present invention, there is provided a device for magnetically treating a fluid comprising a plurality of annular magnetic portions each having a central aperture arranged coaxially so as to define a central bore through which a fluid may pass, wherein said central apertures have varying diameters and said portions are disposed in sequence so that the diameter of said central bore varies axially therealong; and wherein said portions are arranged so as to provide a uniform magnetic field having poles of opposite polarity disposed at opposite ends of said passage.

Preferably, the annular magnetic portions comprise a permanent magnet or magnets.

In accordance with another aspect of the present invention, there is provided a device for magnetically treating a fluid comprising a plurality of annular magnetic portions each having a central bore arranged coaxially so as to define a central passage through which a fluid may pass, wherein said magnetic portions are disposed so as to provide a magnetic field having lines of magnetic flux which intercept said fluid within said passage substantially at an oblique angle relative to the direction of fluid flow.

In accordance with a further aspect of the invention, there is provided a device for magnetically treating a fluid comprising a plurality of annular magnetic portions each having a central bore arranged coaxially so as to define a central passage to fit upon a cylindrical device to be entrained in said fluid, wherein said magnetic portions are disposed so as to induce a magnetic field upon said cylindrical device and in turn on said fluid thereby magnetically treating said fluid.

The invention will be better understood in the light of the following description of several specific embodiments. The description of the embodiments is made with reference to the accompanying drawings, wherein:-
Fig.1 is an exploded view of the annular magnetic portions comprising the annular magnetic body in accordance with the first embodiment;
Fig.2 is a perspective view showing the device in its fully assembled form in accordance with the first embodiment;
Fig.3A is an end view of the magnetic body of Fig.1 from the north pole end;
Fig.3B is an end view of the magnetic body of Fig.1 from the south pole end;
Fig.4 is a longitudinal sectional view of Fig.2;
Fig.5 is a schematic cross-sectional view similar to Fig.4 showing the effect of the successive annular magnetic portions on the flow of fluid through the device;
Fig.6 is a side view of the device in its fully assembled form in accordance with the second embodiment;
Fig.7 is an end view of the device shown in Fig.6 from the coil end;
Fig.8 is an end view of the device shown in Fig.6 taken from the magnetic body end;
Fig.9 is a longitudinal cross-sectional view of the device shown in Fig.6;
Fig.10 is a longitudinal cross-sectional view of the device in its fully assembled form in accordance with a third embodiment;
Fig.11 is a sectional view of the device incorporated into a spark plug socket in accordance with the fourth embodiment;
Fig.12a is a sectional view of the device incorporated into a spark plug in accordance with the fifth embodiment;
Fig.12b is a sectional view of the device incorporated into a spark plug in accordance with the sixth embodiment;
Figs. 13a, 13b and 13c are longitudinal sectional views of different embodiments which are variations of the first embodiment; and
Figs 14a, 14b and 14c are longitudinal sectional views of discrete embodiments of the invention being variations of the second embodiment.

The first embodiment is directed towards an in-line device for magnetically treating hydrocarbon fuels during their passage along a fuel line to the carburettor or fuel injectors of an internal combustion engine.

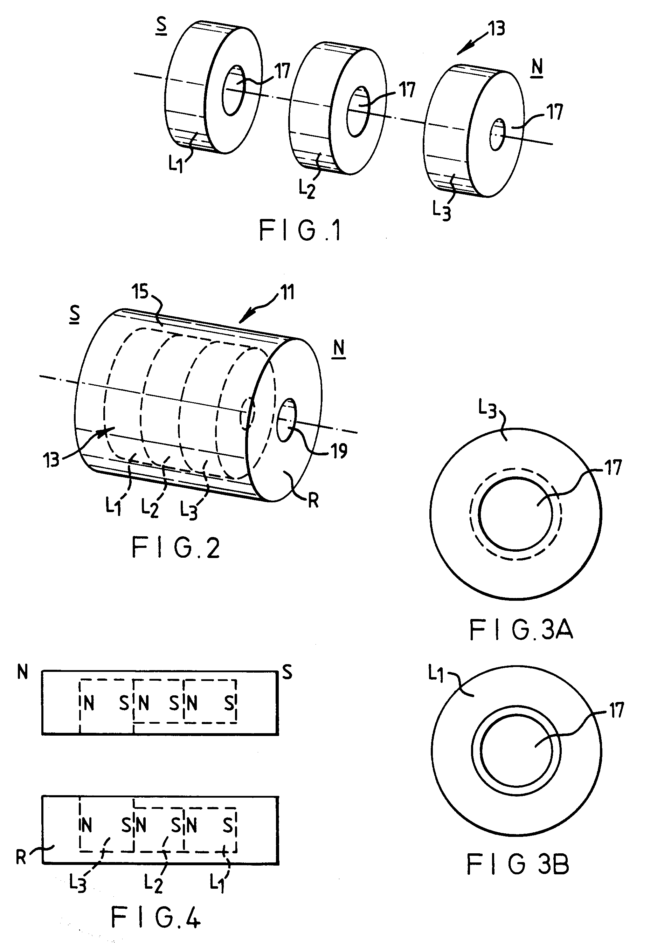

As is shown in Figs. 1 to 5 of the drawings, the device 11 comprises a magnetic body 13 formed by a series of discrete ring magnets L1, L2 and L3 which are encased within a housing 15 formed of non-magnetic material such as a resin R.

The ring magnets L1-L3 are arranged in juxtaposition to form a plurality of annular magnetic portions each having a central bore 17 which are coaxially aligned so as to define a central passage 19 through which the fuel line 21 connecting to the carburettor of the internal combustion engine may pass to provide for the passage of hydrocarbon fluid therethrough.

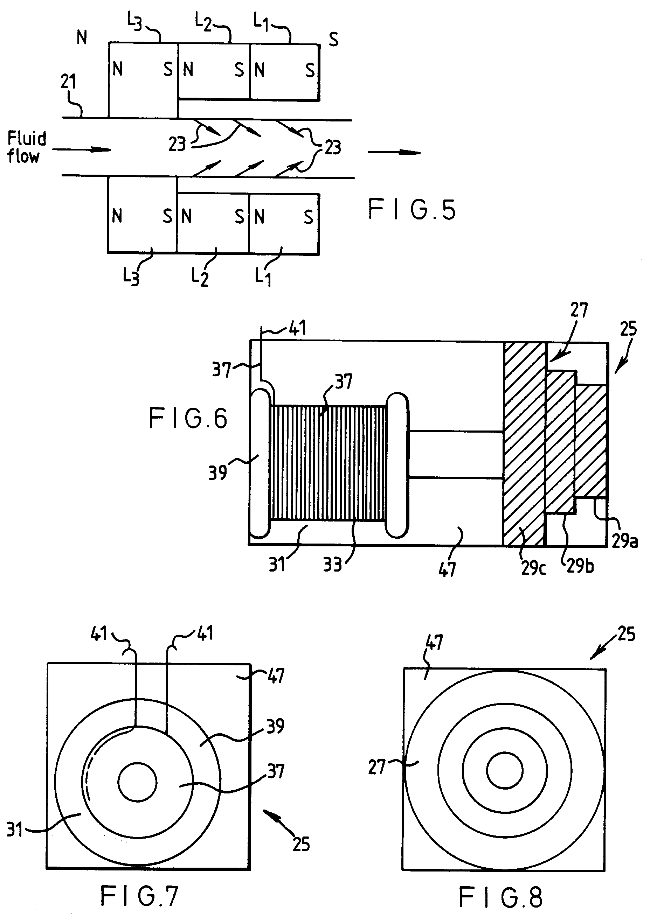

The central bores 17 have varying diameters and importantly the ring magnets are arranged so that the annular magnetic portions are disposed in a graduated sequence wherein the ring magnet L3 having a central bore with the smallest diameter is disposed at one end of the passage, designated as the north pole end, and the ring magnet L1 having a central bore with the largest diameter is disposed at the other end of the passage, designated as the south pole end, as shown in Figs. 4 and 5 of the drawings.

In the present embodiment, there are only three rings or portions shown and two of these L1 and L2 have the same diameter central bore. However, in other embodiments more than three rings or portions are provided which have a greater variance in diameter of the central bore and hence provide a higher degree of graduation.

The ring magnets L1-L3 of the present embodiment are the form of permanent magnets where the opposite poles of each magnet are disposed at the axial ends of the ring magnet. Consequently, the ring magnets are arranged so that poles of opposite polarity are disposed adjacent to each other as is shown in Figs. 4 and 5 of the drawings, so as to reinforce the magnetic field and align the lines of magnetic flux.

This physical arrangement of the magnetic portions is fixed by the binding effect of the resin R so that the device when fully assembled forms an integral unit which can be fitted in line with the fuel line 21.

Now describing the method of using the device, the device 11 is threaded upon the fuel line 21 through its central passage 19 so that the north pole of the magnetic body is disposed up stream of the fluid passage through the fuel line and the south pole is disposed down stream, at least 8cm away from the carburettor or fuel injector of the internal combustion engine. By adopting this arrangement, the magnetic portion L3 with the smallest diameter central bore concentrates the magnetic field so that the magnetic flux describing the field is at its most dense at the north pole end of the device. With subsequent changes in the diameter of the central bores 17 of the magnetic sections sequentially along the passage 19, the direction of the magnetic flux changes with respect to the direction of fluid flow through the pipe within the passage so that the lines of magnetic flux intercept the fluid flow at an oblique angle to the direction of fluid flow through the passage, as conceptually represented by the arrows 23 in Fig.5.

The second embodiment is directed towards a device 25 which effectively incorporates the device 11 and supplements the magnetic body 13 formed by the permanent ring magnets with a further magnetic body which instead of comprising a permanent magnet, comprises an induced magnet.

As shown in Figs. 6 through to 9 of the drawings, the device 25 comprises a magnetic body 27 formed of a series of three permanent ring magnets 29a, 29b and 29c, and a further magnetic body 31 in the form of an inductive coil 33.

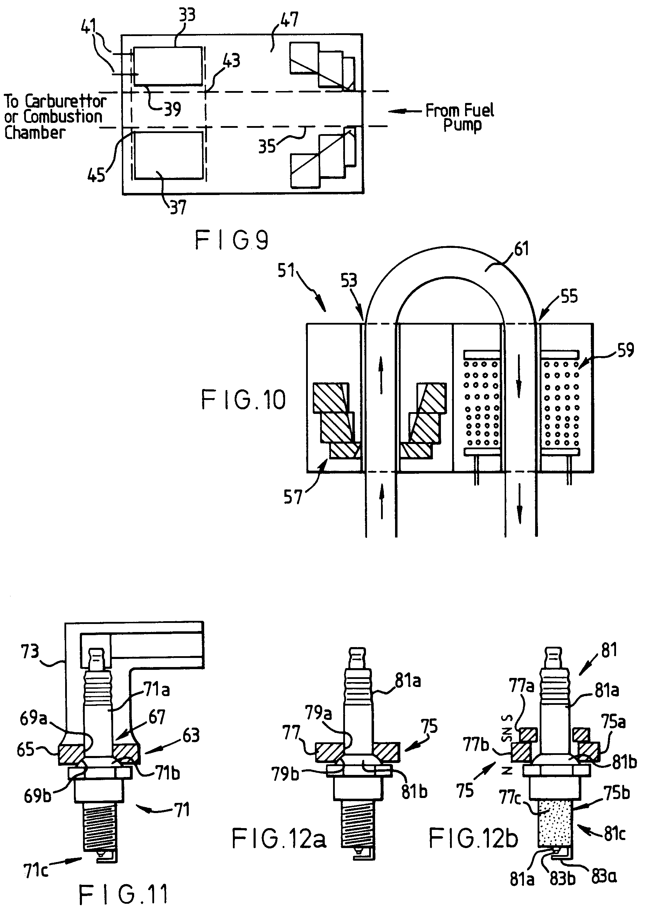

The ring magnets 29 differ in physical form from those of the previous embodiment in that the external diameter of each annular section increases proportionally with the increase in the diameter size of the central bore. Consequently, the outside of the magnetic body is circumferentially stepped in a graduated manner in conjunction with the inner surface of the central passage 35 defined by the annular sections, which is best shown in Fig. 9 of the drawings.

The inductive coil 33 is of conventional form comprising a winding of copper wire 37 mounted upon a non-magnetic former 39. The two ends of the copper wire 37 are electrically connected to a pair of corresponding terminals 41 which are intended for connection to an electrical circuit which provides a potential of 12 volts DC across the terminals. The coil 33 is regularly wound a prescribed number of turns upon the former 39 to generate a relatively strong magnetic field around the coil when the electrical circuit therefor is actuated.

The former 39 of the coil has a central aperture 43 which defines a further central bore 45 through which the fuel line may pass.

In the present embodiment, the coil 33 is disposed axially of the magnetic body 27 so that the central passage 35 passing through the magnetic body 27 is axially aligned with the further central bore 45 formed by the central aperture 43 of the further magnetic body 31.

In addition, the inductive coil 33 is disposed axially adjacent to the south pole end of the permanent ring magnets and the potential is applied to the terminals 41 so as to generate an effective north pole at the upstream end of the coil and a pole of opposite polarity at the downstream end. Consequently, the magnetic field produced by the induced magnet of the further magnetic body complements the direction of the field formed by the permanent rings magnet.

Furthermore, due to the constant diameter of the central aperture 43 of the coil, the lines of magnetic flux describing the magnetic field of the coil intercept the fluid flow in a uniform and generally parallel relationship with the direction of fluid flow through the bore 45.

The magnetic body 27 and further magnetic body 31 are encased within a housing 47 of non-magnetic material such as resin to maintain a fixed physical relationship between the respective bodies and to combine the two into an integral unit.

By using an induced magnet for the further magnetic body, a much stronger and constant magnetic field can be created than with the use of permanent magnets. Consequently, the further magnetic body 31 supplements the permanent magnetic body 27 to provide for better and prolonged treatment of the hydrocarbon fluid which passes along the fuel line prior to entering the carburettor or fuel injector.

It should be appreciated that although Figs. 6 and 9 depict a relatively large space between the magnetic body 27 and further magnetic body 31, the space need not be of this magnitude, and indeed the respective magnetic bodies may in fact be disposed in juxtaposed axial relationship so that the respective magnetic fields created by each body are complementary thereby creating a single uniform magnetic field.

In addition, although there is only one induced magnet described in the present embodiment, it should be appreciated that in other embodiments more than one induced magnet can be provided to create a stronger magnetic field than would be the case with a single induced magnet.

The third embodiment is substantially similar to the preceding embodiment except that the permanent magnetic body and further magnetic body of the device are disposed laterally of each other instead of axially, as shown in Fig. 10 of the drawings.

In this arrangement, the device 51 has the respective central passage 53 and 55 of the permanent magnetic body 57 and further magnetic body 59 disposed in discrete parallel relationship so that the fuel line 61 adopts a U-shaped configuration to pass sequentially through the bodies.

As in the previous embodiment, the permanent magnetic body is disposed upstream of the further magnetic body 59 so that the fuel is magnetically treated by the magnetic field intercepting the flow in two different ways.

The fourth embodiment is directed towards a substantially modified arrangement of the device described in the first embodiment which facilitates the magnetic treatment of hydrocarbon fuels at the point of combustion within a cylinder of an internal combustion engine. Moreover, the present embodiment makes use of the spark plugs of an internal combustion engine by adapting the device to be incorporated into each of the spark plug sockets, in the manner shown in Fig.11 of the accompanying drawings.

As shown in the drawing, the device 63 comprises a single permanent ring magnet 65 defining a central passage 67 which is specially machined to divide the ring magnet into a plurality of annular magnetic portions each having a central bore of a different diameter.

As shown in the drawing, two annular magnetic portions are provided one having a central bore 69a of a diameter sufficient to circumscribe the base of the ceramic stem 71a of a spark plug 71, and the other having a central bore 69b of a greater diameter, being substantially concave and of complementary shape to the domed steel mounting 71b of the spark plug.

The ring magnet 65 is welded to the end of the spark plug socket 73 so that the magnetic portion with the central bore 69b is disposed at the end of the socket so that when the socket is connected to the spark plug, the magnetic ring surmounts the ceramic stem 71a and steel mounting 71b in the manner shown at Fig.11 of the drawings. At this position, the tip 71c of the spark plug is magnetised so that hydrocarbon fluid in the vicinity of the tip will be treated magnetically immediately prior to and during ignition thereof.

The fifth embodiment is similar to the fourth embodiment except that instead of the device comprising the ring magnet being integral with the spark plug socket, the device is integral with the spark plug itself.

The present embodiment is illustrated with reference to Fig. 12a of the drawings whereby the device 75 comprising the ring magnet 77 is of substantially identical form to that described in the preceding embodiment, i.e. being a single ring magnet having a central passage specially machined to divide it into two annular magnetic portions, one with a central bore 79a of commensurate diameter to the base of ceramic stem 81a of the spark plug 81, and the other with a larger diameter central bore 79b of complementary and commensurate shape to the domed steel mounting 81b.

Importantly, the ring magnet 77 is permanently adhered or welded to the spark plug 81 to surmount its ceramic stem 81a and steel mounting 81b in the manner shown in Fig.12a.

The sixth embodiment is essentially an extension of the arrangement described in the preceding embodiment and is illustrated in Fig.12b of the drawings. The present embodiment involves some significant modifications to the spark plug 81 to create a much stronger magnetic field than is the case with the previous embodiment.

Firstly, the device 75 comprises a plurality of ring magnets which are arranged to effectively form two discrete magnetic bodies. One 75a which surmounts the ceramic stem 81a and steel mounting 81b, as in the previous variation, and the other 75c which forms a collar adjacent to the tip 81c of the spark plug.

The first magnetic body 75a comprises two discrete ring magnets 77a and 77b which have central bores of different diameter and which are arranged in a similar manner to the arrangement of the magnetic body described in the first embodiment. The first ring magnet 77a surmounts the second ring magnet 77b, the latter being of similar form to the ring magnet 77 described in the preceding embodiment, but which has a straight bore portion of a larger diameter than that of the previous embodiment. The first ring magnet 77a also has a straight walled central bore which has a diameter smaller than that portion for the central bore of the second ring magnet 77b which is also straight walled and commensurate to the external diameter of the ceramic stem 81a. Furthermore, the poles of the ring magnets are axially disposed and are arranged with opposite poles adjacent to each other to generate a uniform, reinforced magnetic field. As in the first embodiment, the central passage formed by the central bores of the ring magnets 77a and 77b is of a varying diameter graduating from the smallest diameter at one end to the largest diameter at the other end.

The other magnetic body 75b comprises a cylindrical magnet 77c which surrounds the tip end of the ceramic stem 81a and to which is connected the outer electrode terminal 83a of the spark plug so that the inner and outer electrode terminals 83a and 83b respectively are oppositely polarised and a magnetic field is generated between the gap of the spark plug.

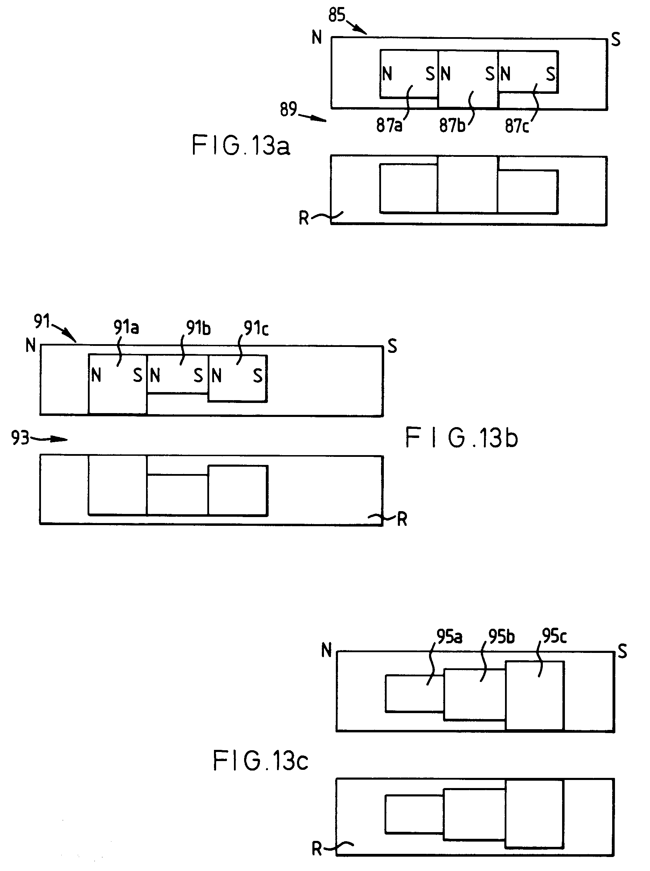

It should be appreciated that although each of the preceding embodiments have described the use of a device having a series of annular magnetic portions with central bores of varying diameter arranged in a graduated sequence from small to large, other embodiments can be adopted where this graduated sequence is dispensed with, but where the magnetic field may still be varied so as to intercept the flow of fluid at a substantially oblique angle relative to the fluid flow. For example, Figs. 13a, 13b and 13c show different arrangements of the ring magnets of the first embodiment which achieve this.

As shown in Fig. 13a, the device 85 comprises a series of ring magnets 87 where those 87a and 87c having central bores 89 with the largest diameter, (i.e. L1 and L2 of the first embodiment) are arranged at the opposite ends of the magnetic body and the remaining ring magnet 87b having a central bore with the smallest diameter (i.e. L3 of the first embodiment) is disposed intermediate of the ends. It should be appreciated that this arrangement will cause the lines of magnetic flux passing centrally along the passage 89 of the device to deviate obliquely with respect to the direction of fluid flow along the passage, and consequently achieve a similar effect to that of the preceding embodiment.

In the arrangement shown in Fig 13b of the drawings, the magnetic body 91 is formed by three permanent ring magnets 95a, 95b and 95c, each having central bores of different diameter, but which again are not arranged in a graduated sequence. Moreover, the ring magnet 91a with the smallest diameter is disposed at one end of the device and the ring magnet 91c with the central bore of an intermediate size diameter is disposed at the other end of the device. Accordingly, the ring magnet 91b with the largest diameter is disposed in juxtaposed relationship in between the two end magnets 91a and 91c, which again will cause a deviation in the lines of magnetic flux passing centrally along the passage 93 in an oblique direction relative to the direction of fluid flow.

In the arrangement shown in Fig. 13c of the drawings, a graduated sequence of ring magnets 95, each having central bores of different diameters, is again illustrated, but instead of the ring magnet with the central bore of the smallest diameter being disposed at the effective north pole end of the device, the ring magnet with the central bore of the largest diameter is disposed at this end and the ring magnet 95c with the central bore of the smallest diameter is disposed at the effective south pole end of the device.

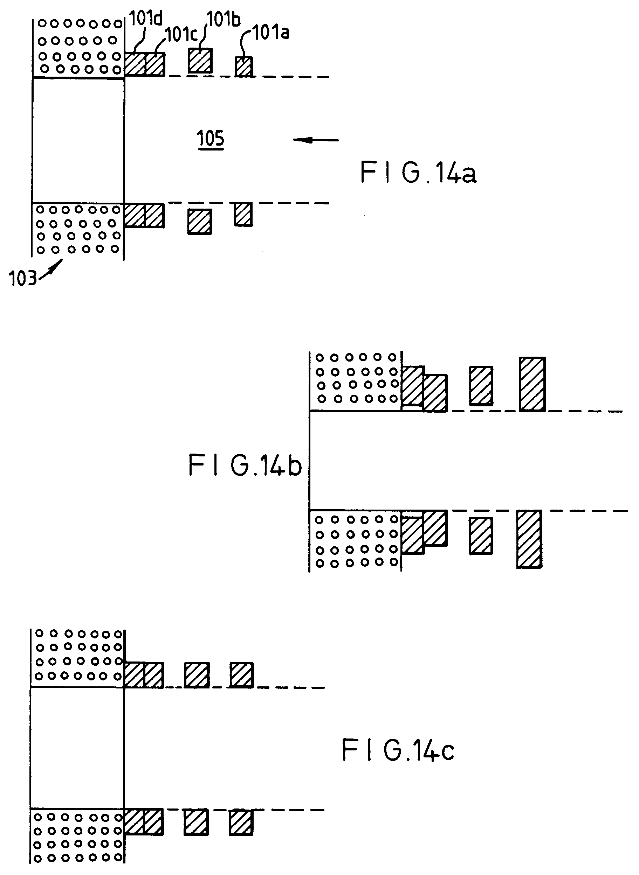

Although variations in bore size are shown in the preceding embodiments to achieve deviation of the magnetic flux, it should also be appreciated that the same effect can be achieved with respect to varying the spacing between adjacent ring magnets, and also combining this with changes in the size of the central bores of the various ring magnets. Furthermore, any of these arrangements can be supplemented with the use of an induced magnet of the coil type described in the second and third embodiments. Different variations of this are illustrated in Figs. 14 of the drawings.

As shown in Fig.14a of the drawings, a series of magnetic bodies are provided by the use of a series of permanent ring magnets 101 and an induced magnet 105. As can be seen, the first ring magnet disposed upstream of the fluid flow through the central passage 103 formed by the various magnetic bodies is of the smallest diameter, and also is of the smallest axial extent or thickness. This ring magnet 101a furthermore is spaced a prescribed distance axially from the next ring magnet 101b. The second ring magnet 101b has a central bore of a larger diameter than that of the first ring magnet 101a, and also has an axial extent approximately twice that of the first ring magnet. The second ring magnet 101b is also spaced axially a prescribed distance from the next ring magnet 101c. The third ring magnet 101c has a central bore with an inner diameter commensurate to that of the first ring magnet 101a and has an axial extent intermediate the first and second ring magnets. The third ring magnet 101c is disposed in juxtaposed relationship to the next ring magnet 101d which is of identical size and shape thereto. The fourth ring magnet 101d is disposed in juxtaposition to the induced magnet 103 which is formed by a coil of the type described in the second embodiment. The coil is wound upon a former having a diameter commensurate to that of the first, third and fourth ring magnets 101a, 101c and 101d respectively, i.e. those ring magnets having central bores with the smallest diameter. All of the magnetic bodies have their central bores coaxially disposed in a moulded and resinous housing as described in the first and second embodiments to form an integral unit which may be fitted in line with a fuel line or the like.

Figs. 14b and 14c show two further variations of the device shown in Fig. 14a. The device in Fig.14b utilises two pairs of ring magnets, each pair having a central bore of a different size in diameter, but where successive ring magnets are alternately disposed with respect to both central bore size and axial spacing. The device shown in Fig.14c uses a series of ring magnets and an induced magnet all having central bores of the same size diameter, but where the deviation in the lines of magnetic flux is achieved by the differing axial spacing between the magnetic rings.

It should be appreciated that the scope of the present invention is not limited to the specific embodiments described herein. Moreover, the invention is not limited to application with hydrocarbon fluids used for fuel in internal combustion engines and that the devices described can have utility as in-line devices with other types of fluids flowing along a pipe or line.

For example, the invention may have utility as an in-line device used with:-
fuel gas lines of commercial and industrial gas burners for deriving more heat and force from the burning gas flames thereby giving substantial gas savings;
fuel lines of commercial industrial factories for generating power, steam, gas, electricity etc., to provide better combustion therefore yielding extra power and maximum fuel savings and gas and electricity bills;
cooling gas systems of motor vehicles, tractors, harvesters or commercial and/or industrial air-conditioners etc., for considerably enhancing the cooling capacity as well as reducing the load on the compressor where the cooling gases inside the pipes pass through;
the water hoses or pipes in car radiators or water cooling towers, boilers etc. of commercial and industrial plants, to soften the water, dilute the acidity in the water, prevent rust or delay its process, prevent scale buildup and/or dissipate heat faster from the cooling fins and/or heat sinks associated with such plants;
electrical wires to improve current flow and reduce resistance along the wire and thus considerably reduce electricity bills for commercial and industrial factories.

The invention can also have utility in applications other than in-line devices. For example, a number of devices can be arranged beneath or inside a cup, plate, tray etc. and be bonded by a non-magnetic material. In this manner, the invention can be used to preserve liquids, solid foods, fruits etc.

Another application of the device is in the incorporation of the same in clothing such as specially design neckbands, vests and jackets which may be worn whilst the device is actuated for short periods of time.

## Claims

1. A device for magnetically treating a fluid comprising a plurality of annular magnetic portions each having a central bore arranged coaxially so as to define a central passage through which a fluid may pass, wherein said central bores have varying diameters and said portions are disposed in a sequence so that the diameter of said central passage varies axially therealong; and wherein said portions are arranged so as to provide a uniform magnetic field having poles of opposite polarity disposed at opposite ends of said passage.

2. A device as claimed in claim 1, wherein a said annular magnetic portion comprises a permanent magnet or magnets.

3. A device as claimed in claim 2, wherein a said annular magnetic portion comprises an induced magnet or magnets.

4. A device as claimed in any one of the preceding claims, wherein said annular magnetic portions are grouped into discrete magnetic bodies each of which may comprise one or more annular magnetic portions; said magnetic bodies being characterised by magnetic portions of the same type and spacing.

5. A device as claimed in any one of the preceding claims, wherein the central bore of a said annular magnetic portion is either of constant diameter along its entire axial extent or is of a continuously varying diameter along its entire axial extent.

6. A device as claimed in any one of the preceding claims, wherein said plurality of annular magnetic portions comprise a series of discrete ring magnets each having poles of opposite polarity disposed adjacent to each other so as to reinforce said magnetic field and being jusxtaposed so as to form an integral unit.

7. A device as claimed in any one of the preceding claims, wherein said magnetic portions are encased within a housing of non-magnetic material to form an integral unit.

8. A device for magnetically treating a fluid comprising a plurality of annular magnetic portions each having a central bore arranged coaxially so as to define a central passage through which a fluid may pass, wherein said magnetic portions are disposed so as to provide a magnetic field having lines of magnetic flux which intercept said fluid within said passage substantially at an oblique angle relative to the direction of fluid flow.

9. A device as claimed in claim 8 wherein at least a pair of said magnetic portions are axially spaced at prescribed distance from each other along said passage.

10. A device for magnetically treating a fluid comprising a plurality of annular magnetic portions each having a central bore arranged coaxially so as to define a central passage to fit upon a cylindrical device to be entrained in said fluid, wherein said magnetic portions are disposed so as to induce a magnetic field upon said cylindrical device and in turn on said fluid thereby magnetically treating said fluid.

11. A device for magnetically treating a fluid substantially as herein described in any one of the embodiments.
